**Europäisches Patentamt**

(19) **European Patent Office**

**Office européen des brevets**

(11) Publication number : **0 427 307 B1**

# (12) EUROPEAN PATENT SPECIFICATION

(45) Date of publication of patent specification :
15.12.93 Bulletin 93/50

(51) Int. Cl.[5] : **A23C 9/15,** A23C 19/05

(21) Application number : **90202683.0**

(22) Date of filing : **10.10.90**

(54) **Dairy products.**

(30) Priority : **07.11.89 GB 8925098**

(43) Date of publication of application :
**15.05.91 Bulletin 91/20**

(45) Publication of the grant of the patent :
**15.12.93 Bulletin 93/50**

(84) Designated Contracting States :
**AT BE CH DE DK ES FR GB GR IT LI NL SE**

(56) References cited :
EP-A- 0 250 623
EP-A- 0 323 529
EP-A- 0 347 237
GB-A- 1 273 943
CHEMICAL ABSTRACTS, vol. 80, no. 19, 13th
May 1974, page 292, abstract no. 106945d,
Columbus, Ohio, US; N.D. TSVETKOYA et al.:
"Formation of products of proteolysis in
cheese with whey proteins", & TR. VSES.
NAUCH.-ISSLED. INST. SYRODEL. PROM.
1973, NO. 10, 83-91

(56) References cited :
FOOD SCIENCE & TECHNOLOGY AB-
STRACTS, 1976, pages 132-135, no. 76-
11-P2234 (7606430); V. NEBERT et al.:
"Manufacture of pribaltiiskii cheese with the
addition of whey protein", & UNION OF
SOVIET SOCIALIST REPUBLICS, ALTAISKOE
KRAEVOE PRAVLENIE NTO PISHCHEVOI
PROMYSHLENNOSTI CHEESE SYMPOSIUM
VNIIMS, UGLICH, USSR
JOURNAL OF DAIRY SCIENCE, vol. 69, no. 10,
October 1986, pages 2543-2550, Champaign,
IL, US; K.A. BALDWIN et al.: "Evaluation of
yield and quality of cheddar cheese manufac-
tured from milk with added whey protein con-
centrate"

(73) Proprietor : **UNILEVER N.V.**
**Weena 455**
**NL-3013 AL Rotterdam (NL)**

(84) **BE CH DE DK ES FR GR IT LI NL SE AT**
Proprietor : **UNILEVER PLC**
**Unilever House Blackfriars P.O. Box 68**
**London EC4P 4BQ (GB)**

(84) **GB**

(72) Inventor : **Visser, Johannes**
**Olivier van Noortlaan 120**
**Vlaardingen (NL)**
Inventor : **Torenvliet, Lim**
**Olivier van Noortlaan 120**
**Vlaardingen (NL)**
Inventor : **Kloosterman Johannes**
**Olivier van Noortlaan 120**
**Vlaardingen (NL)**

(74) Representative : **Hartong, Richard Leroy et al**
**Unilever N.V. Patent Division P.O. Box 137**
**NL-3130 AC Vlaardingen (NL)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for the preparation of improved low fat cheese products.

In the prevailing appeal among consumers of a healthy diet, particular attention is drawn to reducing the daily intake of animal fat, not only to reduce the calorific content of the diet, but also the content of saturated fatty acids and cholesterol. To this end the high fat content in traditional food products has been reduced in recent years, while attempting to retain the fulsome mouth response characteristic of full fat products. When the amount of fat in cheese is reduced, the textural properties of a hard or semi-hard cheese in particular in the case of Gouda-cheese are changed. Such a reduction makes the cheese firm, increasing the rubbery texture of the cheese which ultimately can be almost inedible due to its extreme toughness.

On the other hand reducing fat in soft or fresh cheese results in a loss of creaminess and an enhanced dryness in the mouth is perceived. Here too the product may be almost inedible.

A solution to this problem has now been found in a process to prepare low fat cheese products in which in a particular step of the process part of the fat is replaced by hydrated, denatured protein particles in which the particle size is sufficiently small to induce a mouthfeel similar to that of the fat in cheese like products. It has further been found that different kinds of cheese i.e. soft or fresh cheese versus hard or semi-hard cheese require particles with a different particle size.

The present invention therefore provides a process for the preparation of improved low fat cheese products, by aggregation of casein in milk in which at least part of the milk fat normally present in the milk is replaced by an amount of hydrated, denatured protein particles with an average particle size between 0.1 and 20 μm, which process is characterised by the fact that the hydrated denatured protein particles are added to skimmed or partly skimmed milk before pasteurization thereof and before the aggregation of the casein c.q. by rennet is carried out and wherein particles with an average particle size of maximum 2 μm are used for the preparation of soft or fresh cheese, and particles with an average particle size between 2-20 μm are used for the preparation of hard or semi-hard cheese.

The invention results in improved low fat cheese which contains an amount of hydrated, denatured protein particles, with an average particle size of less than 2.0 μm or within the range of 2-20 μm.

A variety of hydrated denatured, protein particles may be used in the process of the invention, e.g. aqueous dispersions of storage vegetable proteins, blood serum, bovine serum and albumen. A prerequisite is, that the particles retain their solid properties during the process. Preferably, denatured whey protein is used, since the resulting cheese product then retains the components of milk and the incorporation of components akin to the cheese system occurs. It was found, that particle sizes substantially above 20 μm are less satisfactory in terms of the mouth response to the product.

Suitable protein based, aqueous compositions are described in our earlier EP 352 144. It describes compositions of non-aggregated, heat-denatured colloidal particles with particle size of 0.1-30 μm of heat denatured plant proteins. It also discloses, that these compositions can be used as fat replacers in food, but it does not mention the use of it in cheese.

In European Patent Applications 250623 and 323529 suitable small sized, hydrated heat denatured protein particles are also described, which are obtained by intensive shearing. The particle size is 0.1-2.0 μm, whereas less than 2% are above 3.0 μm and it is disclosed, that both the shape of the particles and in particular the particle size are important for the organoleptic properties of the particles. The use of these components as fat-replacer in food is mentioned, but again the use in cheese is not described.

According to Chem. Abstr. 80 (1974), no. 19, p. 292, abstr. 106945d it is known to add whey-proteins to milk prior to its pasteurization. However, nothing is disclosed about the influence of the particle size on the product properties of the resulting cheese product. In GB 1,273,943 a process is described, wherein milk protein precipitation products are applied in milk products. However, the precipitation products are made by a process, that avoids partial denaturation of the protein.

Food Science and Tech. Abstr. 1976, p. 132-135, no. 76-11-P 2234 discloses the use of denatured whey protein for the preparation of Probaltiiskii cheese. However, nothing is said about the moment of addition of the whey protein.

Similar information can be found in J. of Dairy Science 69, 1986, 2543-2550, although according to this references the whey is added at the end of the ripening process.

In US 3,644,326 Pien has disclosed a process for the preparation of cheese, wherein proteins are extracted from lactoserum and re-introduced into the milk during manufacturing. However, no indications can be found, when to add the proteins to the milk.

Preferably low fat cheeses are prepared in accordance with the invention with a fat on dry matter content of less than 40% by regulating the fat content of the skimmed milk and by varying the amount of added hydrated, denatured protein particles. In this way either hard, semi-hard, processed, fresh or soft cheeses can be prepared.

The particle size of the denatured protein particles is thus chosen depending on the kind of cheese, that is required. If a hard or semi-hard cheese is required the average particle size must be 2-20 μm. If however soft cheeses, such as cottage cheese, fresh cheese, fromage frais, mold ripened cheeses, or processed cheeses, with a smooth, more viscous type of texture is required particles with an average particle size sufficiently small e.g. maximum 2 microns must be used in order to retain the smooth character of the cheese.

The denatured whey protein composition is preferably prepared by heating a solution of undenatured whey proteins at a concentration below the gelling concentration, i.e. below 8 wt%, at pasteurisation temperatures or higher, as required. Part of the whey proteins are heat denatured and are acidified to a pH between 4.0 and 5.5, such that particles are formed of less than 20 μm in average size, which can be separated e.g. by centrifugation from the mother liquor. The particles so obtained, containing approximately 85 wt% water can then be neutralised to the pH of milk and may then be combined with a milk composition of reduced fat content to provide a cheese milk. The taste and texture of cheese made from this milk is more or less that of full fat cheese, depending on the extent to which the milk composition is depleted of fat and the amount of whey protein added.

The process of the invention lends itself to simple recycling of sweet whey from cheese manufacture, the whey being processed as described to produce a composition of denatured unaggregated protein particles which may then be recycled to the cheese milk. Preferably the amount of denatured protein particles added to the cheese milk is from 1 to 5 wt% based on the fat content of the milk.

While it is not intended to limit the scope of the invention claimed by reference to any particular theory regarding the mechanism involved, it is believed that the unfavourable mouth response of skimmed or partly skimmed milk based cheeses prepared from heating milk before cheese making is attributable to the effect of whey protein binding to the casein micelles present in milk as a result of this heating. In addition the clotting process is affected hereby, in particular at milk heating temperatures above 85°C, when cheese making is no longer possible.

When instead the whey proteins are heated alone, they are able to react with themselves resulting in the formation of particles of the required dimensions, provided their concentration is below the gelation concentration and heating time and temperature combinations and pH are kept to within the limits required to maintain the average particle size below 20 microns.

Example I

Cheese whey recovered from Gouda full fat cheese preparations and comprising a 5% solution of undenatured whey proteins, was heated for 2 minutes at 76°C by passage through a plate heat exchanger and cooled to room temperature. It was then acidified to a pH 5.0 by gradual addition of citric acid with rapid agitation to avoid locally high acid concentrations. The acidified whey was then centrifuged at 5000g for 15 minutes, when a supernatant liquor was separated, leaving a concentrate containing 12 wt% protein.

The average size of the protein particles in the concentrate, measured with a Coulter Counter particle size analyser was 3.1 microns, consisting largely of unaggregated denatured whey protein particles. The composition was neutralised by adding sufficient aqueous sodium hydroxide (0.1 N) again with agitation to give a final pH of 6.7.

Cheese milk was prepared by mixing sufficient skim milk with full fat milk to a fat level of 1.5 wt%, to which the neutralised whey protein concentrate was added at a ratio of 1 part to 50 of the milk composition. The milk mixture so obtained was pasteurised in a conventional manner by passage through a heat-exchanger for 35 seconds at 72°C.

Gouda cheese was prepared in a traditional manner from the resulting reduced fat milk composition by adding starter culture and rennet at 31°C. The resulting curd had the same structure as the equivalent full fat cheese and subsequent cutting, wheying-off and washing procedures were unchanged. The cheese was pressed before brining and coated as usual before storage for 10 weeks in a cheese ripening room.

Cheese taste and texture of the ripened product were evaluated by a panel on a 5 point scale in comparison with full fat Gouda cheese and with products made in comparative tests in which the above example was repeated a) without adding whey protein, b) with pasteurisation before addition of the whey protein of the cheese milk. The results of the comparison appear on the accompanying table.

## TABLE

Low Fat Cheese – overall panel scores on a 5 point scale (5 as maximum). Influence of whey protein particles and the moment of pasteurisation on taste/texture of the cheese.

| Sample | $48^{+*}$ | $A^*$ | B | C |
|---|---|---|---|---|
| Consistency: overall | 4.6 | 2.1 | 3.6 | 2.9 |
| flavour: overall quality | 5.0 | 2.3 | 3.1 | 3.0 |
| overall intensity | 4.6 | 3.1 | 3.7 | 3.6 |

$48^{+*}$ = commercial full fat Gouda cheese ) * comparative
$A^*$ = without whey protein particles ) examples
B = with whey protein particles, added before pasteurisation
C = with whey protein particles, added after pasteurisation

The fat content on dry matter of the samples A, B and C were respectively: 31%, 32% and 32%.
The results must be interpreted in such a way, that the figure that is closest to the figure for sample $48^+$ is the best.

From the results mentioned in the Table it can be concluded, that the low fat cheese, that most resembles a full fat cheese is Sample B, but Sample C also has quite satisfactory properties. Sample A is very unsatisfactory.

The example was repeated with slight modifications as indicated below. The results of these experiments were quite satisfactory and comparable with those of Samples B and C from the Table.

Ex. II   centrifugation was replaced by overnight settling and simple decanting of the supernatant.

Ex. III   less full fat milk was added, resulting in a cheese with FID of 10%. The amount of whey was raised accordingly.

Ex. IV   the heating temperature for the denaturation of the sweet whey solution was 81°C, heating time 2 mins, resulting in particles of 10 μm.

Ex. V   heating temperature 90°C; particle size 20 μm Ex. VI protein particle obtained, according to EP 323529 were used.

## Claims

1. Process for the preparation of improved low fat cheese product by aggregation of casein in milk in which at least part of the milk fat normally present in the milk is replaced by an amount of hydrated, denatured protein particles with an average particle size between 0.1 and 20 um wherein the hydrated, denatured protein particles are added to skimmed or partly skimmed milk before pasteurisation thereof and before the aggregation of the casein is carried out and wherein particles with an average particle size of maximum 2 μm are used for the preparation of soft or fresh cheese, and particles with an average particle size between 2-20 μm are used for the preparation of hard or semi-hard cheese.

2. Process according to claim 1, wherein the fat content of the skimmed milk and the amount of added hydrated, denatured protein particles are such, that the low fat cheese product has a fat on dry matter content of less than 40%.

3. Process according to claims 1 or 2, wherein denatured whey protein particles with an average size of maximum 20 μm are used.


**Patentansprüche**

1. Verfahren zur Herstellung eines verbesserten Magerkäseproduktes durch Aggregieren von Kasein in Milch. in welchem mindestens ein Teil des normalerweise in der Milch vorliegenden Milchfettes durch eine Menge hydratisierter, denaturierter Proteinteilchen einer durchschnittlichen Teilchengröße zwischen 0,1 und 20 μm ersetzt ist, worin die hydratisierten, denaturierten Proteinteilchen einer entrahmten oder partiell entrahmten Milch vor deren Pasteurisierung und bevor die Aggregation des Kaseins durchgeführt ist, zugefügt werden und worin Teilchen einer durchschnittlichen Teilchengröße von maximal 2 μm zur Herstellung von Weich- oder Frischkäse verwendet werden und Teilchen einer durchschittlichen Teilchengröße zwischen 2 bis 20 μm zur Herstellung von hartem oder halbhartem Käse verwendet werden.

2. Verfahren nach Anspruch 1, worin der Fettgehalt der entrahmten Milch und die Menge an zugefügten hydratisierten, denaturierten Proteinteilchen so bemessen sind, das das Magerkäseprodukt einen Fettgehalt, bezogen auf Trockenmaterial, von weniger als 40 % hat.

3. Verfahren nach den Ansprüchen 1 oder 2, worin denaturierte Molkeproteinteilchen einer durchschnittlichen Größe von maximal 20 μm verwendet werden.


**Revendications**

1. Procédé pour la préparation d'un produit de fromage allégé amélioré par l'agrégation de caséine dans le lait, dans lequel au moins une partie de la matière grasse laitière normalement présente dans le lait est remplacée par une quantité de particules de protéines hydratées, dénaturées ayant une taille moyenne de particule comprise entre 0,1 et 20 micromètres, dans lequel les particules de protéines hydratées dénaturées sont ajoutées à du lait écrémé ou partiellement écrémé avant que celui-ci ne soit pasteurisé et avant que ne soit effectuée l'agrégation de la caséine et dans lequel les particules ayant une taille moyenne de particule de 2 micromètres au maximum sont utilisées pour la préparation de fromage frais ou à pâte molle, et les particules ayant une taille moyenne de particule comprise entre 2 et 20 micromètres sont utilisées pour la préparation de fromage à pâte dure ou semi-dure.

2. Un procédé selon la revendication 1, dans lequel la teneur en matière grasse du lait écrémé et la quantité de particules de protéines hydratées dénaturées sont telles que le produit de fromage allégé à une teneur en matière grasse inférieure à 40 % par rapport à la teneur en matière sèche.

3. Un procédé selon les revendications 1 ou 2, dans lequel on utilise des particules de protéines de petit lait dénaturées ayant une taille moyenne de 20 micromètres au maximum.